# FASCICULE DE BREVET EUROPEEN

(11) **EP 2 154 184 B1**
(45) Date de publication et mention de la délivrance du brevet: **08.01.2014**
(21) Numéro de dépôt: 09305687.7
(22) Date de dépôt: 20.07.2009
(51) Int. Cl.: C08J 7/18, D06N 3/06, D06N 3/08, C08J 3/24, C08J 3/28

(54) **Procédé de vernissage de revêtement de sols et murs souples en PVC**
Farbbeschichtungsverfahren von flexiblen Boden- und Wandverkleidungselementen aus PVC
Method for varnishing a PVC covering for flexible walls and floors

(30) Priorité: 29.07.2008 FR 0855203
(43) Date de publication de la demande: 17.02.2010
(73) Titulaire: GERFLOR, 69100 Villeurbanne (FR); Blanchon SA, 69190 Saint Fons (FR)
(72) Inventeur: Hinault, Robert, 69380, MARCILLY D'AZERGUE (FR); Julien, Hervé, 42110, FEURS (FR); Rampon, Raphaël, 69390, CHESSY LES MINES (FR); Marmet, Alexandra, 42800, CHATEAUNEUF (FR); Mayousse, Stéphane, 69330, MEYZIEU (FR); Gesiot, Frédéric, 38090, VAULX-MILIEU (FR)
(74) Mandataire: Dupuis, François

(56) Documents cités:
- BE-A1- 899 487
- DE-A1- 4 419 852
- FR-A- 1 061 259
- BAUER ET AL: "UV curing and matting of acrylate coatings reinforced by nano-silica and micro-corundum particles" PROGRESS IN ORGANIC COATINGS,, vol. 60, no. 2, 1 septembre 2007 (2007-09-01), pages 121-126, XP022284406 ISSN: 0300-9440
- PRAGER L ET AL: "Strukturierung von oberflaechen strahlenhaertbarer lacke mittels 172 nm excimer-lampen 13" 13 octobre 2005 (2005-10-13), NEUES DRESDNER VAKUUMTECHNISHES KOLLOQUIUM, DRESDNER OCTOBER 13-14,, PAGE(S) 91 - 97 , XP009124432 * le document en entier *

## Description

L'invention se rattache au secteur technique des revêtements de sols et de murs souples présentant en couche superficielle un vernis.

L'obtention de revêtements de sols requiert selon les applications un certain nombre de critères dont la prépondérance respective dépend de l'utilisation dudit revêtement.

Ces paramètres sont ceux de l'aptitude à l'entretien, de la brillance de la résistance aux taches, mais aussi de l'inaltérabilité du décor. Le vernis est donc devenu un élément essentiel à la protection du décor et on utilise généralement un vernis liquide à base de polyuréthane réticulé par rayonnements ultraviolets.

La mise en oeuvre de ces paramètres peut générer certaines contradictions entre par exemple l'effet brillance recherché et celui de la résistance aux taches et similaires. Le choix de vernis mat est privilégié mais avec en contrepartie l'utilisation de systèmes matants qui pénalise la résistance aux taches du revêtement.

La démarche du Demandeur a donc été de réfléchir à un nouveau procédé de vernissage de revêtements de sols et murs qui puisse répondre simultanément aux objectifs suivants :
- donner un aspect mat (la brillance doit se situer entre 8 et 20 % et préférentiellement entre 10 et 12%),
- offrir une résistance chimique élevée face aux taches (et notamment face aux désinfectants hospitaliers comme l'alcool iodée ou les solutions aqueuses à base d'iode),
- offrir une souplesse adaptée à celle d'un revêtement de sol ou de mur résilient et de garantir un entretien aisé pendant la durée de vie du traitement de surface.

La solution apportée par le Demandeur met en oeuvre un procédé spécifique donc les résultats sont très performants avec une réduction et une limitation très importante des taches susceptibles d'apparaître sur les revêtements de sols et murs. La solution permet en outre de conserver un niveau de brillance faible, c'est-à-dire entre 8 et 20% (préférentiellement entre 10 et 12%) pour se conformer à la demande du marché et aux exigences d'usage.

Selon une première caractéristique de l'invention, le procédé de vernissage de revêtements de sols et murs souples met en oeuvre les phases de réalisation d'un vernis mat, à le déposer en couche mince et régulière sur la structure constitutive du revêtement de sols et murs, à pré-densifier le vernis par insolation sous micro-dose UV, à l'aide d'un sécheur, à exposer l'ensemble constitué pour traitement de surface par réticulation sous rayonnements monochromatiques du type lampe EXIMER, suivi d'une seconde étape de réticulation par rayonnements ultraviolets, ces phases étant effectuées en chambre en atmosphère inerte par exemple en présence d'azote (N₂), puis à évacuer le revêtement de sol avec son vernis ainsi traité.

Les lampes de type EXCIMER sont conçues pour émettre un rayonnement monochromatique à partir d'une ou de plusieurs sources ou micro sources afin d'adresser des radiations sur des matériaux permettant entre autre la réticulation d'un film liquide, l'activation énergétique de surface ou la destruction des microorganismes ou des bactéries...

Ces caractéristiques et d'autres encore ressortiront bien de la suite de la description.

Pour fixer l'objet de l'invention illustrée d'une manière non limitative aux figures des dessins où :
- la figure 1 est une vue en plan d'un revêtement de sol avec un vernis non traité selon l'invention et portant des taches laissées par des produits de désinfection hospitalière sur un vernis de surface obtenu par photopolymérisation classique
- la figure 2 est une vue en plan d'un revêtement de sol avec un vernis traité selon l'invention et identifiant les zones où les taches ont été faites sur la figure 1 en faisant apparaître la différenciation.
- la figure 3 est une vue à caractère schématique de l'installation mettant en oeuvre le procédé de l'invention.
- La figure 4 est un graphe à triple entrée permettant de positionner la spécificité de l'invention par rapport aux paramètres de brillance, de rugosité et de résistance chimique.

Afin de rendre plus concret l'objet de l'invention, on le décrit maintenant d'une manière non limitative illustrée aux figures des dessins.

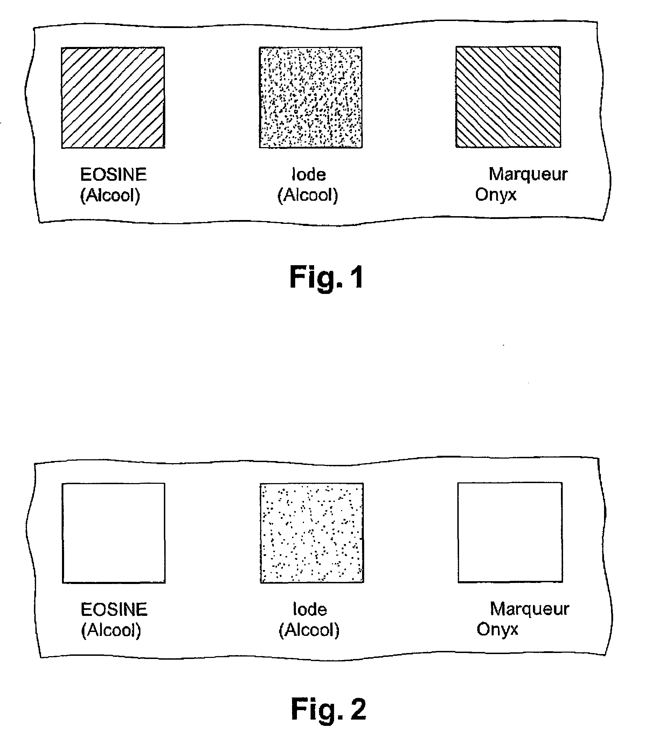

En faisant référence à la figure 1, le revêtement de sols avec un vernis mat non traité selon le procédé de l'invention fait apparaître la conservation des taches par dépose par exemple et non limitativement d'éosine (1), d'alcool iodé (2) ou par marqueur (3). Le même revêtement avec un vernis, et traité par le procédé de l'invention représenté figure 2, permet de constater que les taches faites à partir d'éosine, d'iode ou de marqueur ont soit disparues pour les cas 1 et 3, soit ont été très largement atténuées selon le cas 2. Cela démontre les avantages très spécifiques de l'invention. Ces propriétés ont été obtenues en conservant la brillance souhaitée d'un revêtement de sol (entre 8 et 20%), la souplesse du traitement de surface lui permettant de conserver d'excellentes performances vis-à-vis de la résistance à la rayure et de la résistance à l'abrasion ainsi qu'une aptitude à l'entretien supérieure à la moyenne des revêtements.

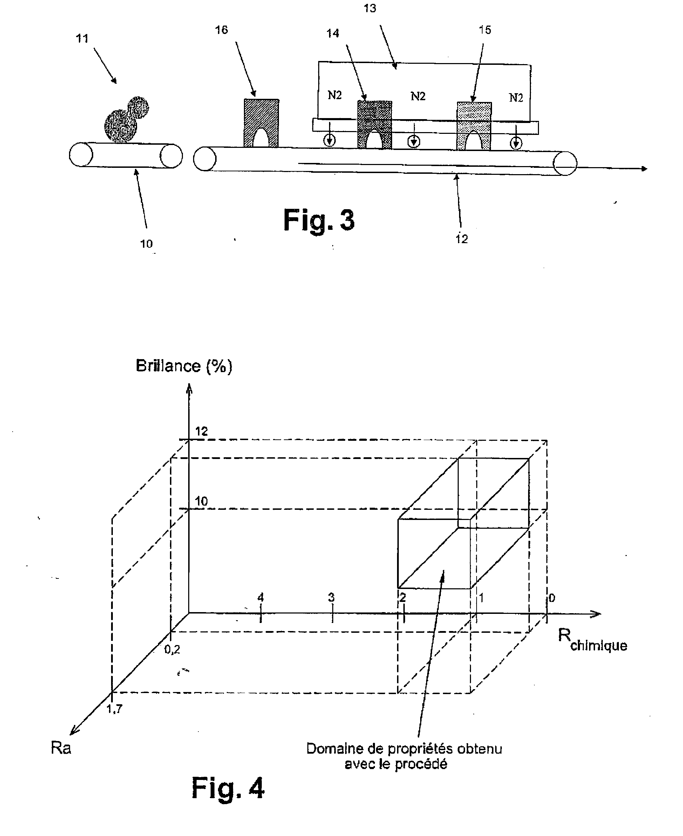

En se référant à la figure 3, on a représenté à titre d'exemple une installation qui met en oeuvre le procédé de l'invention. En amont, un convoyeur (10) est susceptible d'acheminer un revêtement de sols et/ou murs de toute structure sous une vernisseuse (11) qui dépose un vernis en couche mince. Pour la mise en oeuvre de l'invention, le vernis mat est déposé en couche mince, dans une épaisseur comprise entre 8 et 20 µm. On procède ensuite à la pré-densification du vernis par insolation de micro-dose UV, à l'aide d'un sécheur (16). Cette pré-densification s'effectue à des niveaux de rayonnement compris entre 100 et 800 J/cm² et de préférence entre 200 et 500 J/cm2 pour des longueurs d'onde comprises entre 200nm et 400nm. Cette insolation peut-être réalisée à l'aide d'un émetteur UV conventionnel (type lampe à vapeur de mercure) mais aussi à l'aide d'émetteurs dits dopés (type Fer, Plomb, Gallium, Gallium-Indium). Le revêtement et son vernis sont translatés sur un second convoyeur (12) qui traverse une chambre (13) à l'intérieur de laquelle est établie une atmosphère inerte c'est-à-dire avec une concentration résiduelle de dioxygène inférieure à 500ppm et préférentiellement inférieure à 300ppm par exemple d'azote N2. Dans cette chambre, sont disposées successivement une lampe EXCIMER (14) inertée à l'aide d'azote et une lampe ultraviolets (15) également inertée sous N₂ afin de garantir un taux d'oxygène résiduel inférieur à 500ppm. Selon l'invention, on procède donc par le passage du revêtement et de son vernis dans ladite chambre à un traitement de surface par réticulation du vernis sous l'effet laser de ladite lampe EXCIMER, qui est traité ensuite sous rayons ultraviolets. Le procédé selon l'invention offre la possibilité d'exécuter un passage ou plusieurs passages avec dans cette dernière situation des conditions d'usage de la lampe EXCIMER différentes en étant éteinte.

A titre indicatif, les essais effectués ont requis l'utilisation d'une vernisseuse permettant de viser un dépôt régulier (c'est-à-dire avec le plus lisse possible) de 13 g à 15 g / cm². Le sécheur UV (16) utilisé pour la prédensification est réglé sur une puissance de 40w/cm. La lampe EXCIMER (14) a une puissance surfacique de 30 à 35mW/cm² et se situe à une distance de 25 mm du revêtement en position fixe pendant le traitement. La lampe UV (15) a une puissance de l'ordre de 120 à 240W/cm au maximum et se situe à une distance de 100 mm du revêtement. Cette mise en oeuvre a permis d'obtenir le revêtement illustré figure 2 avec la réduction ou la disparition des taches. Plus particulièrement, les vernis de l'un des Demandeurs BLANCHON, fabriquant de vernis, sont particulièrement aptes à la mise en oeuvre du procédé de l'invention avec une résistance aux taches de toute nature. Le vernis utilisé nécessite une formulation adaptée au procédé EXCIMER par sa viscosité et son aptitude à la réticulation.

Ainsi, les produits obtenus selon le procédé répondent parfaitement aux objectifs souhaités, avec un aspect brillance contrôlée (et dont la valeur moyenne se situe entre 8 et 20%), avec une excellente résistance chimique aux taches, une rugosité contrôlée en fonction de l'utilisation du revêtement de sol. Le contrôle des paramètres de rugosité (Ra et Rz) permet de garantir la facilité d'entretien du revêtement.

La figure 4 représente ainsi le graphe avec ces trois paramètres qui permettent de positionner le domaine des propriétés obtenues avec le procédé de l'invention.

Le procédé de vernissage selon l'invention permet d'obtenir un revêtement de sols et murs souples en PVC avec un domaine de propriétés dans lequel, avec un vernis spécifique :
- la brillance est comprise entre 8 et 20 % à 60° d'angle (préférentiellement entre 10 et 12%).
- la rugosité Ra (longitudinale) est comprise entre 0,2 et 1,7 µm.
- la résistance aux taches d'éosine, d'iode et de marker est notée entre O et 1 (suivant NF EN 423 - solution d'éosine et d'iode à 2 % dans l'acool éthylique).
- le vernis ne se fissure pas lorsque l'on enroule son support PVC autour d'un mandrin de 20mm de diamètre.

Le produit obtenu par la mise en oeuvre du procédé est caractérisé par l'obtention d'un compromis de performances de surface unique. Le traitement de surface présente un niveau de brillance parfaitement adapté à l'utilisation en tant que revêtements de sols ou de murs (brillance compris entre 8 et 20 %). Le produit résiste aux produits tâchants utilisés dans le domaine hospitalier comme présenté dans la figure 2. Le traitement conserve une souplesse telle qu'il passe les tests normalisés de flexibilité. Enfin, la microrugosité de surface obtenue permet de faciliter l'entretien courant du revêtement de sol.

La double opération de traitement de surface mise en oeuvre selon le procédé de l'invention constitue un apport technologique important dans la qualité des revêtements de sols et de murs.

### Expérimentation :

Cette expérimentation a porté sur trois exemples A, B, C de mise en oeuvre selon l'invention. Pour chaque exemple, le tableau présente les conditions de mise en oeuvre de chaque essai, à savoir :
- épaisseur vernis, puissance de la lampe (16) ou sécheur de prédensification, puissance de la lampe excimer (14), puissance de la lampe UV (15), et vitesse du convoyeur
- la combinaison de ces paramètres permet d'obtenir les résultats suivants mettant en valeur les propriétés du procédé selon l'invention à savoir :
   ■ colonne d) avec trois type de taches
   ■ colonne e) flexibilité
   ■ colonne f) brillance
   ■ colonne g) sensibilité à la chaise à roulettes
   ■ colonne h trois paramètre de rugosité

On observe à la lecture des résultats des 3 essais A, B, C donnés à titre d'exemple que les propriétés et caractéristiques spécifiques de l'invention répondent aux buts recherchés initialement rappelés au préambule de la description.

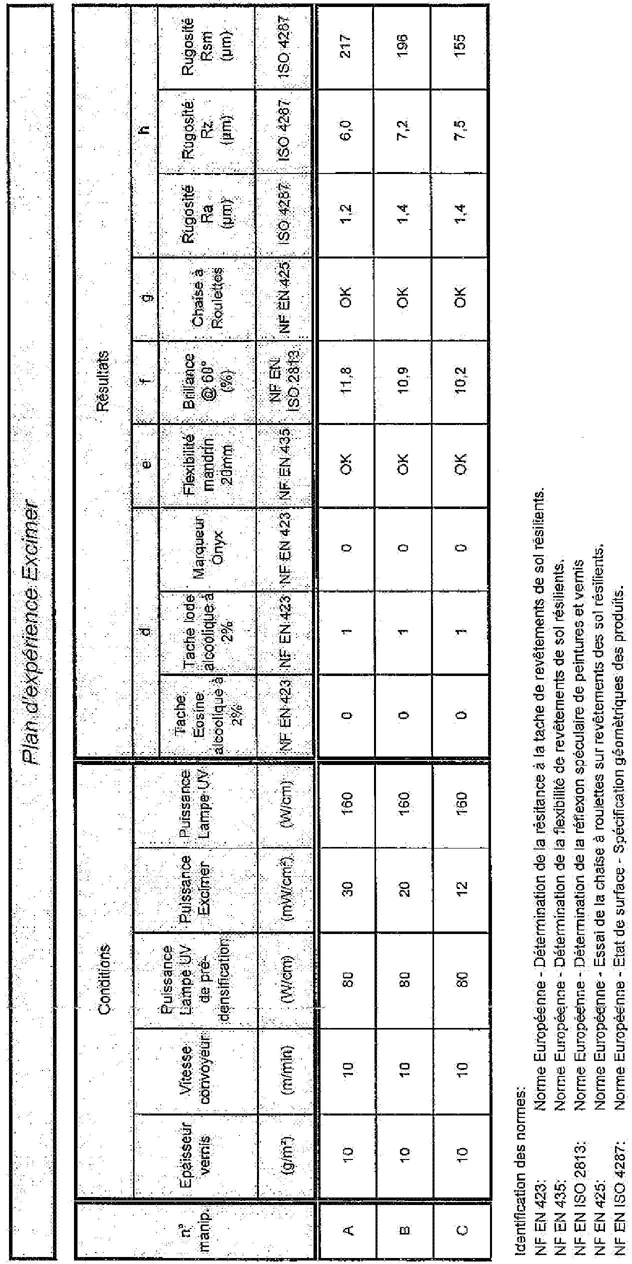

## Revendications

1. Procédé de vernissage de revêtements de sols et murs souples, **caractérisé en ce qu'**il met en oeuvre les phases de réalisation d'un vernis mat à le déposer en couche mince et régulière sur la structure constitutive du revêtement de sols à pré-densifier le vernis par insolation sous ultra violets et à l'aide d'un sécheur (16), à exposer l'ensemble constitué pour traitement de surface par réticulation sous lampe à rayonnement monochromatique de type EXCIMER (14), suivi d'une seconde étape de réticulation par lampe (15) ultraviolets, ces phases étant effectuées en chambre (13) en atmosphère inerte sous N₂, puis à évacuer le revêtement de sols et murs avec son vernis ainsi traité, **et en ce que** le vernis mat est disposé en couche mince dans une épaisseur comprise entre 8 et 20 µm, **et en ce que** la prédensification s'effectue à des niveaux de rayonnement entre 100 et 800 J/cm2 pour des longueurs d'ondes comprises entre 200nm et 400nm.

2. Procédé selon la revendication 1 **caractérisé en ce que** la prédensification s'effectue à des niveaux de rayonnement entre 200 et 500 j/cm.

3. Installation de mise en oeuvre du procédé selon l'une quelconque des revendications 1 et 2, **caractérisée en ce qu'**elle comprend un convoyeur (10) susceptible d'acheminer un revêtement de sols et/ou murs de toute structure sous une vernisseuse (11) qui dépose un vernis mat, un convoyeur (12) permettant la translation du revêtement et son vernis sous un émetteur UV à l'aide d'un sécheur (16) assurant la pré-densification du vernis puis dans une chambre (13) à l'intérieur de laquelle est établie une atmosphère inerte sous N₂, **et en ce que** dans ladite chambre, sont disposées successivement une lampe EXCIMER (14) inertée sous vide et une lampe ultraviolets (15) également inertée sous N₂.

4. Revêtement de sols et murs souple obtenu selon le procédé de vernissage de l'une quelconque des revendications 1 et 2 **caractérisé en ce qu'**ils ont en combinaison un domaine de propriété selon lequel avec un vernis :
- la brillance est comprise entre 8 et 20 % à 60° d'angle (NF EN ISO 2813)
- La rugosité Ra (longitudinale) est comprise entre 0,2 et 1,7 µm (ISO 4287)
- la résistance aux taches d'éosine, d'iode et de marker est notée entre 0 et 1 (NF EN 423)
- le vernis ne se fissure pas lorsque l'on enroule son support PVC autour d'un mandrin de 20mm de diamètre (NF EN 435)

5. Revêtement de sols et murs selon la revendication 4 **caractérisé en ce que** la brillance est entre 10 et 12 %.

## Patentansprüche

1. Verfahren zum Lackieren von flexiblen Boden- und Wandbelägen, dadurch gekennzeichet, dass es die Herstellungsphasen eines Mattlacks einsetzt, diesen als eine dünne und gleichmäßige Schicht auf die den Bodenbelag bildende Struktur aufzutragen, den Lack durch Ultraviolettbestrahlung und mittels eines Trocknungsgeräts (16) vor zu verdichten, die gebildete Einheit zur Oberflächenbehandlung durch Vernetzung unter einer Lampe mit monochromatischer Strahlung vom Typ EXCIMER (14) zu belichten, gefolgt von einem zweiten Schritt zur Vernetzung durch eine Ultraviolettlampe (15), wobei diese Phasen in einer Kammer (13) unter inerter N₂-Atmosphäre durchgeführt werden, dann der Fußboden- und Wandbelag mit seinem so behandelten Lack entnommen wird, **und dass** der Mattlack als dünne Schicht in einer Dicke zwischen 8 und 20 µm vorgesehen wird, **und dass** die Vorverdichtung mit Strahlungsintensitäten zwischen 100 und 800 J/cm² bei Wellenlängen zwischen 200 nm und 400 nm erfolgt.

2. Verfahren nach Anspruch 1, dadurch gekennzeichet dass die Vorverdichtung mit Strahlungsintensitäten zwischen 200 und 500 J/cm² erfolgt.

3. Anlage zum Durchführen des Verfahrens nach einem der Ansprüche 1 und 2, **dadurch gekennzeichnet, dass** sie eine Fördereinrichtung (10) umfasst, die in der Lage ist, einen Boden- und/oder Wandbelag beliebiger Struktur unter eine Lackiermaschine (11) zu verfahren, die einen Mattlack aufträgt, eine Fördereinerichtung (12), welche die translatorische Verschiebung des Belags und seines Lacks unter einen UV-Strahler, der mittels eines Trocknungsgeräts (16) die Vorverdichtung des Lacks sicherstellt, dann in eine Kammer (13) ermöglicht, in deren Innerem eine inerte N₂-Atmosphäre hergestellt ist, **und dass** in der Kammer aufeinanderfolgend eine inertisierte EXCIMER-Lampe (14) unter Vakuum und eine ebenfalls inertisierte Ultraviolettlampe (15) unter N₂ vorgesehen sind.

4. Flexibler Boden- und Wandbelag, der gemäß dem Lackierverfahren nach einem der Ansprüche 1 und 2 erhalten ist, **dadurch gekennzeichnet, dass** er in Kombination einen Eigenschaftsbereich hat, gemäß dem mit einem Lack:
- der Glanz bei einem Winkel von 60° zwischen 8 und 20% beträgt (NF EN ISO 2813)
- die Rauigkeit Ra (längs) zwischen 0,2 und 1,7 µm beträgt (ISO 4287)
- die Widerstandsfähigkeit gegenüber Eosin-, Jod- oder Markerflecken zwischen 0 und 1 bewertet ist (NF EN 423)
- der Lack nicht reißt, wenn sein PVC-Träger um einen Dorn mit 20 mm Durchmesser ausgerollt wird (NF EN 435)

5. Boden- und Wandbelag nach Anspruch 4, dadurch gekennzeichet, dass der Glanz zwischen 10 und 12% liegt.

## Claims

1. A method of varnishing flexible floor and wall coverings, **characterized in that** it implements the phases of forming a matt varnish, depositing it in a thin, regular layer on the structure forming the floor covering, pre-densifying the varnish by ultra-violet illumination and by means of a drier (16), exposing the formed assembly for a surface treatment by cross-linking under an EXCIMER-type monochromatic radiation lamp (14), followed by a second step of crosslinking by an ultraviolet lamp (15), these phases being carried out in a chamber (13) in an inert atmosphere under N₂, and then evaluating the floor and wall covering with its varnish thus treated, **and in that** the matt varnish is arranged in a thin layer with a thickness in the range from 8 to 20 µm, **and in that** the pre-densification is performed at radiation levels between 100 and 800 J/cm², for wavelengths in the range from 200 nm to 400 nm.

2. The method of claim 1, **characterized in that** the pre-densification is performed at radiation levels between 200 and 500 J/cm².

3. An installation for implementing the method of any of claims 1 and 2, **characterized in that** it comprises a conveyor (10) capable of conveying a floor and/or wall covering of any structure under a varnishing machine (11) which deposits a matt varnish, a conveyor (12) enabling to have the covering and its varnish displace under a UV emitter by means of a drier (16) which pre-densifies the varnish, and then into a chamber (13) having an inert atmosphere under N₂ established therein, **and in that** in said chamber are successively arranged an EXCIMER lamp (14) inerted under vacuum and an ultraviolet lamp (15) also inerted under N₂.

4. A flexible floor and wall covering obtained according to the varnishing method of any of claims 1 and 2, **characterized in that** they have, in combination, a property domain according to which, with a varnish:
- the gloss is between 8 and 20% at a 6° angle (NF EN ISO 2813)
- roughness Ra (longitudinal) is between 0.2 and 1.7 µm (ISO 4287)
- the résistance to eosin, iodine, and marker stains is rated between 0 and 1 (NF EN 423)
- the varnish does not crack when its PVC support is wound around a mandrel having a 20-mm diameter (NF EN 435)

5. The floor and wall covering of claim 4, **characterized in that** the gloss is between 10 and 12%.
